# EUROPÄISCHE PATENTANMELDUNG

(11) **EP 1 236 425 A2**
(43) Veröffentlichungstag der Anmeldung: **04.09.2002**
(21) Anmeldenummer: 02003919.4
(22) Anmeldetag: 21.02.2002
(51) Int. Cl.: A47J 27/16

(54) **Gargerät zur Behandlung von Lebensmitteln**

(30) Priorität: 02.03.2001 DE 10110112
(71) Anmelder: Convotherm Elektrogeräte GmbH, 82436 Eglfing (DE)
(72) Erfinder: Riefenstein, Lutz, 82362 Weilheim i.Obb. (DE); Smits, Stan, 82362 Weilheim (DE); Wuerdinger, Günther, 82380 Peissenberg (DE)
(74) Vertreter: Zmyj, Erwin, Dipl.-Ing., Dipl.-Wirtsch.-Ing., European Patent Attorney

(57) **Zusammenfassung**

Das Gargerät umfaßt in einem Ablaufstutzen (4) des Garraumbodens (2) eine Kondensationsvorrichtung, die ein Schließteil (6) umfaßt, welches als Hülse ausgebildet ist und in dem Abflußstutzen (4) zwischen zwei Anschlägen (5, 12) verschiebbar geführt ist. Das Schließteil (6) weist einen Träger (10) auf, der Öffnungen (11) für den freien Durchtritt eines aus dem Garraum kommenden gasförmigen Mediums aufweist und einen Prallkörper und gleichzeitigen Umlenkkörper (11) trägt, dem eine Ausströmöffnung (8a) einer Wasserleitung (8) gegenüberliegt. Durch den aus der Wasserleitung austretenden Wasserstrahl, der auf den Umlenk- und Prallkörper (11) auftrifft, wird das Schließteil (6) aus einer Schließlage, bei der das Schließteil in eine Wasseroberfläche (9) eines siphonartigen Kondensators eintaucht, in eine Offenstellung überführt, die das freie Abströmen des gasförmigen Mediums ermöglicht. Durch den Umlenkkörper (11) wird der Wasserstrahl in einen glockenartigen Wasservorhang umgewandelt, durch den das gasförmige Medium hindurchtreten muß. Dabei erfolgt die Kondensation der dampfförmigen Anteile.

## Beschreibung

Die Erfindung bezieht sich auf ein Gargerät zur Behandlung von Lebensmitteln mit einem Garraum, einer Vorrichtung zur Dampferzeugung und einer mit dem Garraum in Verbindung stehenden Kondensationsvorrichtung.

Ein Gargerät dieser Art ist aus der DE 38 21 205 C2 bekannt. Dort ist die Kondensationsvorrichtung in einer Abzweigleitung von der Dampfzuführungsleitung angeordnet, wobei diese Leitung auch mit einem Überdruckventil und einem Unterdruckventil zur Druckbegrenzung und zur Belüftung des Garraumes versehen ist. Diese Einrichtung ist notwendig, da der Abfluß der Kondensationsvorrichtung unter dem Wasserniveau einer als Siphon ausgebildeten Wasservorlage in diese einmündet. Diese Gesamtanordnung ist aufwendig und erfordert immer ein Abschalten der Dampfzufuhr, weil sonst aus dem Garraum keine Brüden durch diese Kondensationsvorrichtung niedergeschlagen werden können.

Bei einem Gerät nach der DE 32 15 812 C2 befindet sich in einem nach außen führenden Strömungsweg eine Kondensationsvorrichtung in Form einer als Siphon ausgebildeten Wasservorlage durch die die Brüden bzw. der Abdampf hindurchgeleitet werden, wobei der Dampfanteil in der Wasservorlage kondensiert wird. Diese Kondensationsvorrichtung ist war konstruktiv einfach, ist aber in ihrer Leistungsfähigkeit je Zeiteinheit begrenzt und ermöglicht außerdem nicht die Zuführung von Umgebungsluft in das Gargerät um einen Implosionsschutz zu gewährleisten.

Die DE 43 33 585 C2 zeigt ebenfalls bei einem Gargerät eine Kondensationsvorrichtung in einem nach außen führenden Strömungsweg, wobei die Kondensationsvorrichtung einen Kondensationsraum aufweist, in den mittels einer Ablöschdüse Wasser eingespritzt wird, falls durch die abgeleiteten Brüden die Temperatur in diesem Kondensationsraum so hoch ansteigt, dass eine Kondensation nicht mehr stattfindet. Eine Entleerungspumpe fördert die niedergeschlagenen Brüden in eine Abflussleitung nach außen. Diese Vorrichtung erfordert also eine Ablöschdüse mit entsprechender Ventileinrichtung und Steuerung sowie eine Entleerungspumpe, die ebenfalls einer Steuerung bedarf und somit einen gewissen konstruktiven Aufwand darstellt.

Aufgabe der Erfindung ist es bei einem Gargerät die Kondensationsvorrichtung so anzuordnen und auszubilden, dass nicht nur eine besonders wirksame Kondensation großer Dampfmengen ermöglicht, sondern auch der konstruktive Aufwand gering gehalten wird.

Diese Aufgabe wird bei einem Gargerät der eingangs erläuterten Art erfindungsgemäß dadurch gelöst, dass die Kondensationsvorrichtung in einem nach außen führenden Strömungsweg für ein gasförmiges Medium, z.B. Brüden oder Abdampf, angeordnet ist und ein Schließteil umfaßt, das den Strömungsweg zwischen Garraum und Umgebung verschließt und in eine öffnende Stellung durch strömendes Wasser bringbar ist, das durch den Schließteil innerhalb des Strömungsweges in eine Strömung mit großer Wasseroberfläche überführbar ist, die in Richtung des abströmenden, gasförmigen Mediums ausgerichtet ist.

Die Kondensationsvorrichtung öffnet mit Beginn ihrer Funktion die Verbindung zwischen Garraum und Umgebung, wodurch nicht nur überschüssiger Dampf oder Brüden aus dem Gargerät abziehen können, so dass ein Überdruck in diesem vermieden wird, sondern es kann auch Umgebungsluft in umgekehrter Richtung in das Gargerät einströmen, wodurch ein Implosionsschutz gewährleistet ist. Aufgrund dieser Funktionsweise ist es möglich auf ein Überdruckventil und ein Unterdruckventil zu verzichten. Da die Kondensationsvorrichtung nicht nur in ihrer Größe variiert werden kann, sondern auch in der Anzahl solcher Vorrichtungen, ist es möglich jede beliebig anfallende Brüdenmenge oder Abdampfmenge niederzuschlagen, so dass einerseits sehr rasch der Feuchtigkeitsgehalt im Gargerät eingestellt oder ein gefahrloses Öffnen der Garraumtür ermöglicht werden kann. Letzterer Vorgang ist ein besonderes Problem in Großküchen, da beim Öffnen von einer oder mehreren Garraumtüren nicht nur die Gefahr einer Verletzung des Bedienungspersonals besteht, sondern die Atmosphäre in dieser Küche wird sehr schnell mit Feuchtigkeit überladen. Da das für die Kondensation notwendige Wasser gleichzeitig auch die Öffnung des Schließteiles bewirkt, ist der konstruktive Aufwand sehr stark herabgesetzt. Ein weiterer Vorteil besteht darin, dass eine sehr große Wasseroberfläche erzeugt wird, wodurch mit geringen Wassermengen eine wirksame Kondensation großer Dampfmengen erzielbar ist. Da die Strömungsrichtung des Wasserfilmes in Richtung der aus dem Garraum abströmenden Gase ausgerichtet ist, wird eine Injektorwirkung erzeugt, die ein verstärktes Absaugen aus dem Garraum bewirkt, wodurch dieser in sehr kurzer Zeit vom überschüssigen Dampf oder den dort vorhandenen Brüden befreit werden kann.

Eine bevorzugte Ausgestaltung besteht darin, dass der Schließteil als eine an beiden Enden zumindest teilweise offene Hülse ausgebildet und in einem aus dem Garraum herausführenden Stutzen verschiebbar geführt ist, dass innerhalb der Hülse mindestens ein Prallkörper und gleichzeitiger Umlenkkörper für gegen die Strömungsrichtung des abziehenden, gasförmigen Mediums zugeführtes Wasser ausgebildet ist, der in Verbindung mit dem anströmenden Wasser eine Verschiebung des Schließteils in Richtung einer Öffnung des Strömungsweges bewirkt und dass das vom Garraum abgewandte Ende der Hülse in der Schließstellung mit einer Abdichtfläche zusammenwirkt. Bei Anordnung nur eines Prall- und Umlenkkörpers wird man diesen aus Gründen der ausgeglichenen Krafteinwirkung auf den Schließkörper zentral anordnen. Bei mehreren solcher Prall- und Umlenkkörper innerhalb eines Schließteiles werden diese Prall- und Umlenkkörper symmetrisch in bezug auf die Symmetrieachse dieses Schließteils angeordnet, um eine möglichst gleichmäßige Krafteinwirkung auf diesen Schließteil durch das strömende Wasser ausüben zu können. Diese Ausgestaltung ermöglicht einen einfach aufgebauten Schließteil, der in Verbindung mit dem Prall- und Umlenkkörper eine besonders wirksame Kondensationsvorrichtung bildet. Außerdem sind keine elektrischen Zuleitungen zu irgendwelchen Magnetventilen erforderlich, was deshalb von Vorteil ist, weil es sich hier um einen Naßraum handelt.

Eine vorteilhafte Weiterbildung eines bereits vorhandenen Gargerätes wird durch die Erfindung dadurch erzielt, dass die Abdichtfläche durch eine Wasseroberfläche einer den Garraum nach Art eines Siphons absperrenden Kondensationseinrichtung gebildet ist. Um eine wirksame Abdichtung zu erzielen, taucht das untere Ende des Schließteils in der Schließstellung in die Wasservorlage dieser Kondensationseinrichtung ein.

Eine vorteilhafte konstruktive Ausgestaltung ist dadurch gekennzeichnet, dass in der Nähe des zum Garraum gerichteten Endes des Schließteils ein mit dem Schließteil verbundener Träger für einen Umlenkkörper und Prallkörper vorgesehen ist, dass der Umlenkkörper als ein fingerhutartiger Körper mit konisch erweiteter Wand ausgebildet und mit dem Boden am Träger befestigt ist und dass auf das Innere des Umlenkkörpers eine Ausströmöffnung einer Wasserleitung ausgerichtet ist. Der als fingerhutartiger Körper ausgebildete Prallkörper bzw. Umlenkkörper ist einfach gestaltet und bewirkt mit seiner konisch sich erweiternden Außenwand nicht nur ein einfaches Öffnen des Schließteils, sondern auch eine Ausbildung eines den Abschlußstutzen ausfüllenden Wasserfilmes in Form einer Glocke, die den Strömungsweg zwischen dem Garraum und der Umgebung vollständig ausfüllt, so dass das in den Abflußstutzen eintretende, gasförmige Medium, welches den Garraum verläßt, durch einen Wasserschleier hindurch muß, wodurch eine intensive Berührung zwischen dem gas- bzw. dampfförmigen Medium und dem Wasser eintritt, was zu einer raschen Kondensation führt.

Wenn in weiterer Ausgestaltung der Erfindung in die Wasserleitung ein lose geführter Stößel eingreift, der mit dem Umlenkkörper zusammenwirkt, so werden hierdurch weitere Vorteile erreicht. Ein Vorteil besteht darin, dass der Umlenkkörper zusätzlich geführt wird, wenn der Stößel mit dem Umlenkkörper verbunden ist und ein weiterer Vorteil besteht darin, dass das aus der Wasserleitung austretende Wasser bereits röhrenförmige Gestalt annimmt, so dass bei der Umlenkung die Überführung in einen glockenförmigen Körper in einer einfacheren Weise erfolgen kann. Außerdem wird hierdurch der Wasserdruck des austretenden rohrförmigen Wasserstrahles erhöht. Schließlich wirkt der Stößel als hydraulischer Kolben auf den Umlenkkörper und zwar zusätzlich zur Kraft des freien Wasserstrahles unabhängig davon, ob er fest mit dem Umlenkkörper verbunden ist oder lose auf diesen einwirkt.

Zwar ist die Anordnung der erfindungsgemäßen Kondensationsvorrichtungen in Verbindung mit einer als Siphon wirkenden Wasservorlage besonders vorteilhaft, jedoch ist es auch möglich, dass die Abdichtfläche durch eine Platte in einer Abführleitung für das abströmende gasförmige Medium gebildet ist und dass weiterhin außerhalb der Abführleitung eine Auffangeinrichtung für das Wasser der Kondensationsvorrichtung vorgesehen ist. Diese Ausgestaltung ermöglicht die Anordnung einer Kondensationsvorrichtung nicht nur im Ablaufrohr des Garraumbodens, sondern auch in einer Seitenwand oder der Decke des Gargerätes. Je nach der Menge des anfallenden Dampfes können mehrere Kondensationsvorrichtungen vorgesehen sein. Die Wasserzufuhr zur Kondensationsvorrichtung kann in Weiterbildung der Erfindung in Abhängigkeit eines oder mehrerer Betriebsparameter des Gargerätes steuerbar oder regelbar sein. Ein Betriebsparameter kann beispielsweise der Feuchtigkeitsgehalt im Garraum oder die Temperatur im Garraum sein, ebenso wie die Zufuhr von Wasser auch in Abhängigkeit eines Signals im Zusammenhang mit der Türöffnung erfolgen kann.

Zur Rückstellung des Schließteils in die Schließlage kann die Schwerkraft dienen oder diese Rückstellung kann durch Federkraft erfolgen.

Wenn in weiterer Ausgestaltung der Erfindung am Schließteil mindestens eine Mitnehmerfläche ausgebildet ist, die mit dem aus der Kondensationseinrichtung bei Unterdruck im Gargerät in das Schließteil emporgesaugten Wasser zusammenwirkt, so ist hierdurch gewährleistet, daß das Schließteil durch dieses emporgesaugte Wasser nach oben mitgenommen und somit die Verbindung zwischen dem Garraum und der Umgebung geöffnet wird, so daß diese Ausgestaltung als Implosionsschutz für das Gargerät wirkt.

Die Erfindung wird nachfolgend anhand eines in der Zeichnung dargestellten Ausführungsbeispieles näher erläutert. In der Zeichnung zeigen:
- **Figuren 1 und 2:**: Schematische Schnittdarstellungen eines Teiles eines Gargerätes mit einer ersten Ausführungsform einer Kondensationsvorrichtung in verschiedenen Betriebsstellungen;
- **Figur 3:**: eine schematische Schnittdarstellung einer zweiten Ausführungsform einer Kondensationsvorrichtung an einer Seitenwand eines Gargerätes; und
- **Figur 4:**: eine schematische Schnittdarstellung einer weiteren Ausführungsform einer Kondensationsvorrichtung mit einem Strömungsaustritt an der Decke des Gargerätes.

Da Gargeräte allgemein bekannt sind, wofür beispielsweise auf die Darstellung in der eingangs erwähnten DE 38 21 205 C2 verwiesen wird, beschränkt sich die zeichnerische Darstellung nur auf denjenigen Teil, der erfindungsgemäß gestaltet ist.

Mit 2 ist ein Boden eines nicht dargestellten Garraumes bezeichnet, an den ein Garraumablaufstutzen 4 angeschlossen ist, welcher in eine als Siphon ausgebildete Wasservorlage eingreift, die für sich gesehen ebenfalls schon bekannt ist. Bei der bekannten Ausführungsform reicht der Garraumablaufstutzen bis unterhalb der mit 9 bezeichneten Wasseroberfläche. Die Höhe dieser Wasserfüllung ist durch die Höhe eines Ablaufstutzens 3 innerhalb des mit 1 bezeichneten siphonartigen Kondensators bestimmt. Diese Vorrichtung wird deshalb als Kondensator bezeichnet, weil bisher die aus dem Garraum kommenden Brüden in diesen Kondensator gelangen und beim Durchtreten durch die Wasserfüllung niedergeschlagen werden. Diese Funktionsweise reicht jedoch in bestimmten Fällen nicht aus, weshalb eine zusätzliche erfindungsgemäße Kondensationsvorrichtung vorgesehen ist, die nachfolgend beschrieben ist.

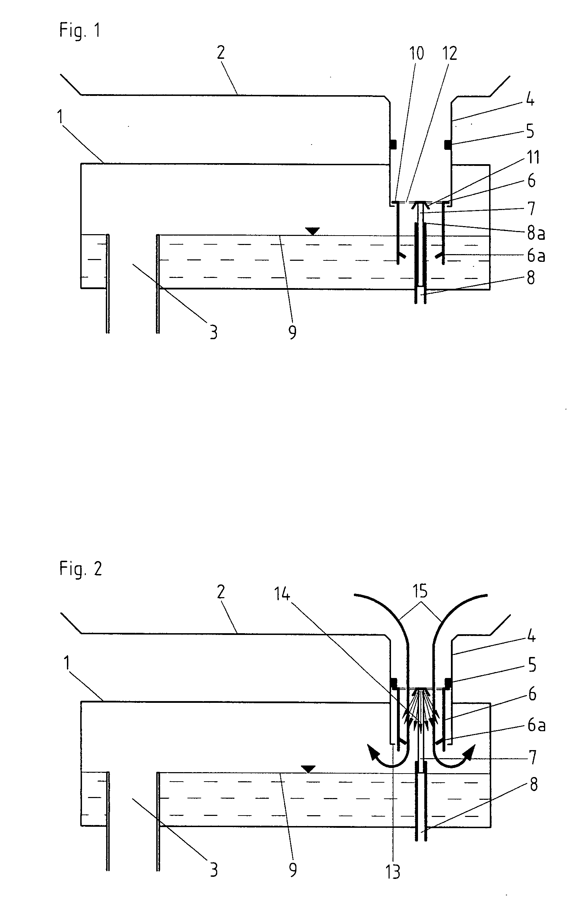

Innerhalb des Garraumablaufstutzens 4, der bei der erfindungsgemäßen Ausgestaltung nicht bis zur Wasseroberfläche 9 reicht, ist die Kondensationsvorrichtung nach der vorliegenden Erfindung untergebracht und umfaßt einen Schließteil 6, der innerhalb des Garraumablaufstutzens 4 in Höhenrichtung verschiebbar geführt ist. Dieser Schließteil ist nach Art einer Hülse ausgebildet, die in der Nähe ihres oberen Endes einen Träger 10 aufweist, der mit dem Schließteil 6 verbunden ist und der an seiner Unterseite einen Prall- und Umlenkkörper 11 trägt und im übrigen Durchgangsöffnungen 12 für ein aus dem Garraum kommendes gasförmiges Medium aufweist, welches aus Brüden und überschüssigem Dampf besteht. Innerhalb des Garraumablaufstutzens 4 sind zwei Anschläge 5 und 13 vorgesehen, die einerseits die in Figur 1 dargestellte unterste Lage des Schließteils 6 und andererseits die in Figur 2 dargestellte oberste Lage des Schließteils 6 bestimmen. In der untersten Lage entsprechend Figur 1 taucht der Schließteil 6 in die Wasserfüllung des Kondensators 1 ein, so dass das aus dem Garraum kommende gasförmige Medium erst nach Durchtritt durch die Wasservorlage in den Kondensatorablauf 3 gelangen kann. Die Wasseroberfläche 9 dient somit als Abdichtfläche. In der in Figur 2 dargestellten obersten Lage des Schließteiles 6 kann das gasförmige Medium über der Wasseroberfläche 9 aus dem Schließteil 6 austreten und über den Kondensatorablauf 3 in ein weiteres nicht dargestelltes Abflußsystem oder ins Freie gelangen. Mit 6a ist eine zusätzliche Mitnehmerfläche zum Umlenkkörper 11 innerhalb des Schließteiles 6 bezeichnet, die mit dem aus der Kondensationseinrichtung bei Unterdruck im Gargerät in das Schließteil emporgesaugten Wasser zusammenwirkt, so daß hierdurch gewährleistet ist, daß das Schließteil durch dieses emporgesaugte Wasser nach oben mitgenommen und somit die Verbindung zwischen dem Garraum und der Umgebung geöffnet wird. Diese Ausgestaltung wirkt somit als Implosionsschutz für das Gargerät.

Auf das Zentrum des Prall- und Umlenkkörpers 11, der mit dem Schließteil 6 über den Träger 10 in Verbindung steht, wirkt ein Stößel 7 ein, der lose in ein Wasserzuführungsrohr 8 eingreift und in diesem entsprechend den Endlagen des Schließteiles 6 geführt ist. Der Stößel 7 kann lose auf den Schließteil 6 einwirken oder fest mit diesem verbunden sein. Durch Zuführen von Wasser mittels des Wasserzuführungsrohres 8 wird dieses aus der Ausströmöffnung 8a austretende Wasser durch den aufgenommenen Stößel 7 röhrenförmig gestaltet und gelangt an die Unterseite bzw. an die Innenseite des fingerhutartigen Prall- und Umlenkkörpers 11 und wird dort durch die Strömungsenergie an diesem Umlenkkörper in Form eines Wasservorhanges 14 umgelenkt, wie dies in Figur 2 angedeutet ist. Das aus dem Wasserzuführungsrohr 8 austretende Wasser hebt dabei durch die innewohnende Strömungsenergie den Schließteil 6 nach oben bis er an den Anschlag 5 gelangt. In diese Stellung, die in Figur 2 dargestellt ist, gelangt der Schließteil 6 auch unter Mitwirkung des als hydraulischer Kolben wirkenden Stößels 7. Der Wasservorhang 14 füllt dabei den Garraumablaufstutzen 4 vollständig aus, d.h. er bildet einen Vorhang, durch den das gasförmige Medium hindurchtreten muß, wie dies durch die Strömungspfeile 15 dargestellt ist. Beim Hindurchtreten des gasförmigen Mediums durch diesen Wasservorhang 14 werden die dampfförmigen Anteile kondensiert und gelangen in die Wasservorlage des Kondensators 1. Wird die Wasserzufuhr durch das Wasserzuführungsrohr 8 abgestellt, so gelangt der Schließteil 6 aufgrund der Schwerkraft wieder in seine Ausgangslage entsprechend Figur 1.

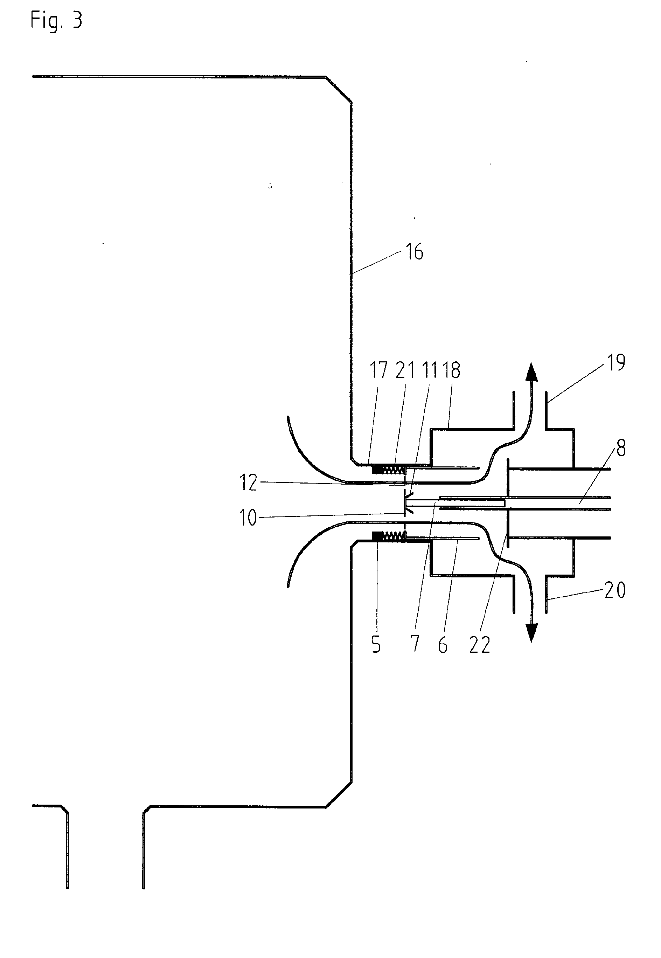

Figur 3 zeigt eine abgewandelte Ausführungsform einer Kondensationsvorrichtung, wobei der Strömungsweg für das abzuziehende Medium von der Seitenwand 16 eines Gargerätes ausgeht und durch einen Auslaßstutzen 17 gebildet ist, der in eine erweiterte Abführleitung 18 übergeht, die einen weiteren Auslaß 19 für das gasförmige Medium und einen Ablaß 20 für Wasser aufweist. Innerhalb des Ablaßstutzens 17 ist ein Schließteil 6 verschiebbar gegen die Wirkung einer Feder 21 geführt, wobei das Schließteil 6 ebenso wie bei der Ausführungsform nach den Figuren 1 und 2 einen Träger 10, einen Prall- und Umlenkkörper 11 und Durchgangsöffnungen 12 aufweisen. Auch bei dieser Ausführungsform wirkt ein Stößel 7 mit dem Prall- und Umlenkkörper 11 zusammen und in einem Wasserzuführungsrohr 8 verschiebbar geführt. Zur Absperrung des Strömungsweges zwischen dem Garraum und der Umgebung ist eine fest angeordnete Platte 22 vorgesehen, die mit dem freien Ende des Schließteiles 6 zusammenwirkt, wenn auf den Prall- und Umlenkkörper 11 keine Kraft des aus dem Wasserzuführungsrohr ausströmenden Wassers einwirkt, so daß die Feder 21 in der Lage ist, das Schließteil 6 gegen die Abdichtfläche 22 zu drücken.

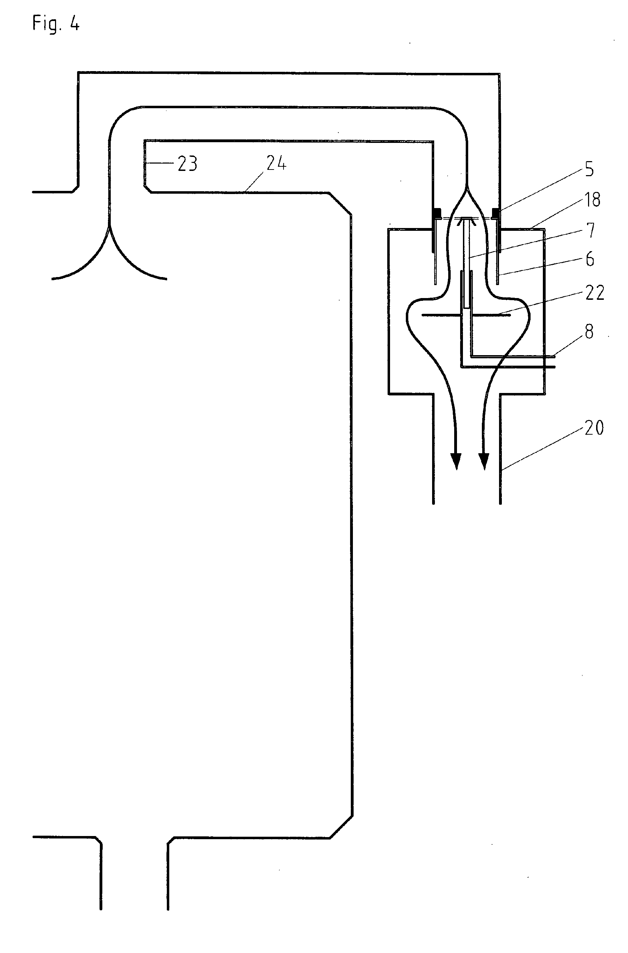

In Figur 4 ist ein Ablaßstutzen 23 an der Decke 24 eines Gargerätes angeordnet, der zu einer Kondensationsvorrichtung führt, die hinsichtlich der Ausbildung des Schließteiles 6 und der Abdichtfläche 22 derjenigen nach Figur 3 entspricht. Hier ist aufgrund der vertikalen Anordnung des Schließteiles 6 die Feder 21 weggelassen, da das Schließteil 6 durch Schwerkraftwirkung in die Schließlage gelangt, in welche das Schließteil 6 auf der Abdichtfläche 22 aufruht. Im übrigen sind vergleichbare Teile mit den gleichen Bezugszahlen wie in den Figuren 1 bis 3 bezeichnet. Wegen der vertikalen Anordnung der Kondensationsvorrichtung ist das Wasserzuführungsrohr in abgeknickter Form gezeichnet und es ist auch nur ein Blasrohr 20 für den gemeinsamen Abzug des gasförmigen Mediums und des Wassers vorgesehen.

## Patentansprüche

1. Gargerät zur Behandlung von Lebensmitteln mit einem Garraum, einer Vorrichtung zur Dampferzeugung und einer mit dem Garraum in Verbindung stehenden Kondensationsvorrichtung, **dadurch gekennzeichnet, dass** die Kondensationsvorrichtung (6-8, 11) in einem nach außen führenden Strömungsweg (4) für ein gasförmiges Medium, z.B. Brüden und Abdampf, angeordnet ist und ein Schließteil (6, 11) umfaßt, das in der einen Stellung den Strömungsweg (4) zwischen Garraum und Umgebung verschließt und in eine öffnende Stellung durch strömendes Wasser bringbar ist, das durch den Schließteil (6, 11) innerhalb des Strömungsweges in eine Strömung mit großer Wasseroberfläche überführbar ist, die in Richtung des ausströmenden gasförmigen Mediums ausgerichtet ist.

2. Gargerät nach Anspruch 1, **dadurch gekennzeichnet, dass** der Schließteil (6, 11) als eine an beiden Enden zumindest teilweise offene Hülse ausgebildet und in einem aus dem Garraum herausführenden Stutzen (4) verschiebbar geführt ist, dass innerhalb der Hülse mindestens ein Prallkörper und gleichzeitiger Umlenkkörper (11) für gegen die Strömungsrichtung des abziehenden, gasförmigen Mediums zugeführtes Wasser ausgebildet ist, der in Verbindung mit dem anströmenden Wasser eine Verschiebung des Schließteils (6, 11) in Richtung einer Öffnung des Strömungsweges bewirkt und dass das vom Garraum abgewandte Ende der Hülse in der Schließstellung mit einer Abdichtfläche (9, 22) zusammenwirkt.

3. Gargerät nach Anspruch 2, **dadurch gekennzeichnet, dass** die Abdichtfläche durch eine Wasseroberfläche (9) einer den Garraum nach Art eines Siphons absperrenden Kondensationseinrichtung (1) gebildet ist.

4. Gargerät nach einem der Ansprüche 1 bis 3, **dadurch gekennzeichnet, dass** in der Nähe des zum Garraum gerichteten Endes des Schließteils (6) ein mit dem Schließteil verbundener Träger (10) für einen Umlenkkörper und Prallkörper (11) vorgesehen ist, dass der Umlenkkörper (11) als ein fingerhutartiger Körper mit konisch sich erweiternder Wand ausgebildet und mit dem Boden am Träger (10) befestigt ist und dass auf das Innere des Umlenkkörpers (11) eine Ausströmöffnung (8a) einer Wasserleitung (8) ausgerichtet ist.

5. Gargerät nach Anspruch 4, **dadurch gekennzeichnet, dass** in die Wasserleitung (8) ein lose geführter Stößel (7) eingreift, der mit dem Umlenkkörper (11) zusammenwirkt.

6. Gargerät nach Anspruch 2, **dadurch gekennzeichnet, dass** die Abdichtfläche durch eine Platte (22) in einer Abführleitung für das abströmende, gasförmige Medium gebildet ist und dass weiterhin außerhalb der Abführleitung eine Auffangeinrichtung für das Wasser der Kondensationsvorrichtung (6-8, 11) vorgesehen ist.

7. Gargerät nach einem der Ansprüche 1 bis 6, **dadurch gekennzeichnet, dass** eine Kondensationsvorrichtung (6-8, 11) im Ablaufrohr (4) des Garraumbodens (2) angeordnet ist.

8. Gargerät nach einem der Ansprüche 1 bis 6, **dadurch gekennzeichnet, dass** mehrere Kondensationsvorrichtungen (6-8, 11) vorgesehen sind.

9. Gargerät nach Anspruch 1 oder 2 oder 4 bis 8, **dadurch gekennzeichnet, dass** mindestens eine Kondensationsvorrichtung (6-8, 11) in einer Seitenwand des Gargerätes angeordnet ist.

10. Gargerät nach Anspruch 1 oder 2 oder 4 bis 8, **dadurch gekennzeichnet, daß** mindestens eine Kondensationsvorrichtung (6-8, 11) in der Decke (24) des Gargerätes angeordnet ist.

11. Gargerät nach einem der Ansprüche 1 bis 10, **dadurch gekennzeichnet, dass** die Wasserzufuhr zur Kondensationsvorrichtung in Abhängigkeit eines oder mehrerer Betriebsparameter des Gargerätes steuerbar oder regelbar ist.

12. Gargerät nach einem der Ansprüche 1 bis 11, **dadurch gekennzeichnet, dass** zur Rückstellung des Schließteiles (6, 11) in die Schließlage Schwerkraft dient.

13. Gargerät nach einem der Ansprüche 1 bis 11, **dadurch gekennzeichnet, dass** die Rückstellung des Schließteiles (6, 11) in die Schließlage durch Federkraft erfolgt.

14. Gargerät nach Anspruch 3, **dadurch gekennzeichnet, dass** am Schließteil (6) mindestens eine Mitnehmerfläche (6a, 11) ausgebildet ist, die mit dem aus der Kondensationseinrichtung (1) bei Unterdruck im Gargerät in das Schließteil (6) emporgesaugten Wasser zusammenwirkt.
